**Europäisches Patentamt**

**European Patent Office**

**Office européen des brevets**

(19)

(11) Veröffentlichungsnummer : **0 216 031 B2**

(12)

# NEUE EUROPÄISCHE PATENTSCHRIFT

(45) Veröffentlichungstag der neuen Patentschrift :
07.10.92 Patentblatt 92/41

(51) Int. Cl.$^5$ : **A61C 8/00**

(21) Anmeldenummer : **86108851.6**

(22) Anmeldetag : **28.06.86**

(54) **Enossales Implantat.**

(30) Priorität : **03.09.85 DE 3531389**

(43) Veröffentlichungstag der Anmeldung :
**01.04.87 Patentblatt 87/14**

(45) Bekanntmachung des Hinweises auf die
Patenterteilung :
**20.06.90 Patentblatt 90/25**

(45) Bekanntmachung des Hinweises auf die
Entscheidung über den Einspruch :
**07.10.92 Patentblatt 92/41**

(84) Benannte Vertragsstaaten :
**AT BE CH DE FR GB IT LI LU NL SE**

(56) Entgegenhaltungen :
**WO-A-85/02337**

(56) Entgegenhaltungen :
**AT-A- 375 012**
**DE-A- 3 300 764**
**DE-B- 2 114 323**
**DE-B- 2 413 883**

(73) Patentinhaber : **IMZ-Fertigungs- und**
**Vertriebsgesellschaft für dentale Technologie**
**mbH**
**Talstrasse 23**
**W-7024 Filderstadt (DE)**

(72) Erfinder : **Kirsch, Axel, Dr.**
**Finkenstrasse 13**
**W-7024 Filderstadt 4 (DE)**

(74) Vertreter : **Goddar, Heinz J., Dr. et al**
**FORRESTER & BOEHMERT**
**Franz-Joseph-Strasse 38**
**W-8000 München 40 (DE)**

EP 0 216 031 B2

## Beschreibung

Die Erfindung betrifft ein enossales Implantat mit einen Befestigungskopf aufweisenden und einen in eine Blindbohrung eines metallischen Grundkörpers lösbar einschraubbaren Implantatpfosten umfassenden Befestigungseinrichtungen für einen Zahnersatz, wobei der mit dem von dem Grundkörper abgewandten Ende des Implantatpfostens verbundene Befestigungskopf mit einer sich in Richtung auf den Zahnersatz vejüngenden Paßfläche versehen ist und zwischen dem Befestigungskopf und dem Grundkörper eine viskoelastische Dämpfüngseinrichtung vorgesehen ist.

Derartige Implantate werden in zunehmendem Umfang verwendet, um Teil- oder Vollprothesen dauerhaft am Kiefer eines Patienten festzulegen, um auf diese Weise ein voll funktionsfähiges, durch Zahnersatz ergänztes bzw. ersetztes Gebiß zu erhalten, welches dem Patienten ein einwandfreies Zerkauen von Speisen ermöglicht und damit eine gesundheitlich sehr wichtige Funktion erfüllt, da das richtige Zerkauen, insbesondere von Rohkost und relativ festen Nahrungsmitteln, wie z.B. Vollkornbrot eine wesentliche Vorstufe des Verdauungsvorgangs ist, wobei zu bedenken ist, daß schlechtsitzende Voll- oder Teilprothesen auch die Gefahr mit sich bringen, daß der Patient wegen der Schwierigkeiten beim Kauen physiologisch wichtige Nahrungsmittel wie frische Salate, Obst und Gemüse nicht oder nur noch in beschränktem Umfang zu sich nimmt.

Bei den bekannten Implantaten wird der Zahnersatz mit dem Befestigungskopf verschraubt, indem eine Schraube, insbesondere ausgehend von einer Kaufläche eines Zahns des Zahnersatzes, in eine vorbereitete Gewindebohrung des Befestigungskopfes eingeschraubt wird.

Es hat sich gezeigt, daß eine einfache Schraubverbindung dieser Art in vielen Fällen nicht ausreicht, um den Zahnersatz an dem Befestigungskopf zu sichern, da die Schrauben die Tendenz haben, sich aufgrund der wechselnden Belastungen bei Kaubewegungen zu lockern, so daß der Patient seinen Zahnarzt aufsuchen muß, um den Zahnersatz neu befestigen zu lassen. Besonders störend ist die Lockerung der Schraubverbindung dann, wenn es sich bei dem Zahnersatz um einen Einzelzahn handelt, da dieser sich dann verdrehen kann, was zu Schaden an diesem Zahn und/oder an den ihm gegenüberliegenden Zahn zur Folge haben kann.

Die DE-B 2 114 323 zeigt ein Implantat, bei dem ein metallischer Implantatpfosten unmittelbar in einen ebenfalls metallischen Grundkörper eingeschraubt ist. Hierdurch werden vom Zahnersatz aus Stöße unmittelbar, und zwar sowohl in vertikaler als auch in Querrichtung, auf den Grundkörper und damit auf dessen Verbindung mit dem Kieferknochen übertragen, woraus nachteilige Folgen insoweit resultieren, als im laufe der Zeit die Verbindung mit dem Kieferknochen leicht gelockert werden kann.

Bei dem Implantat nach der WO-A 8 502 337 sind zum Abfedern von Stößen zwischen Zahnersatz und Implantatpfosten O-Ringe oder eine elastische Zwischenlage vorgesehen. Dies hat den Nachteil, daß die Abfederung an einer Stelle erfolgt, die weit von dem oberen Ende der Einschraubdistanz des Grundkörpers in den Kieferknochen entfernt liegt, wodurch im Implantatpfosten und Befestigungskopf selbst, unterhalb der O-Ringe bzw. der elastischen Zwischenlage auftretende Biegekräfte infolge des langen Hebels ungefedert auf den Grundkörper und damit auf die Verbindung zwischen Grundkörper und Kieferknochen übertragen werden können. Die hieraus resultierenden Stoßbeanspruchungen können wiederum die Festigkeit der Verbindung zwischen dem Grundkörper und dem Kieferknochen nachteilig beeinflussen.

Die DE-B 2 413 883, die wesentlich auf den Erfinder in Sachen der vorliegenden Patentanmeldung zurückgeht, zeigt schließlich ein enossales Implantat, bei dem ein unmittelbarer metallischer Kontakt zwischen dem Befestigungskopf mit ebenfalls aus Metall bestehendem Implantatpfosten und dem metallischen Grundkörper dadurch verhindert wird, daß in die Blindbohrung des Grundkörpers als viskoelastisches Zwischenelement eine Kunststoffhülse eingeschraubt ist, sowie ferner dadurch, daß zwischen dem oberen Rand des Grundkörpers und der Anlagefläche des Befestigungskopfes ein nachgiebiger Ring angeordnet ist. Dieses bekannte Implantat besitzt den Nachteil, daß durch den Befestigungskopf, der sich ja gegenüber dem Grundkörper infolge der nachgiebigen Lagerung bei Kaubewegungen etc. bewegen kann, eine Reizung der Schleimhaut stattfindet, die im Laufe der Zeit zu Entzündungen und einer Lockerung des Sitzes führen kann.

Der Erfindung liegt daher die Aufgabe zugrunde das gattungsgemäße Implantat dahingehend weiterzubilden, daß ein Reizen der Schleimhaut durch Verformungsbewegungen verhindert und insgesamt ein Implantat mit verbessertem Langzeitsitz geschaffen werden kann.

Erfindungsgemäß wird diese Aufgabe durch die Merkmale des kennzeichens des Patentanspruches 1 gelöst. Durch diese erfindungsgemäß ausgestaltete Distanzhülse wird eine Verlängerung des Grundkörpers geschaffen, die aus verschiedenen Gründen sehr vorteilhaft ist, wie dies nachstehend noch näher erläutert wird.

Der Implantatpfosten kann dabei vorzugsweise selbst, insbesondere einschließlich des Befestigungskopfes, als einstückiges Kunststoffteil aus viskoelastischem Material hergestellt sein, wobei der Implantatpfosten so ausgebildet wird, daß eine elastische Verformung bei einer Krafteinwirkung zumindest im wesentlichen nicht in einem zum Befestigungskopf gehörenden Bereich auftritt, so daß Relativbewegungen zwischen dem Befestigungskopf und dem Zahnersatz allenfalls in sehr geringem Umfang auftreten. Dies ist jedoch hinsichtlich der Haltbarkeit der Schraubverbindung völlig unwesentlich, da die Verformbarkeit des Materials des Implantatpfostens bzw. des Befestigungskopfes zu einer besonders engen Passung bzw. Verkeilung der Paßflächen führt, da selbst geringste Toleranzen zwischen den Paßflächen durch eine entsprechende Verformung des Kunststoffmaterials bei der Herstellung der Schraubverbindung vollständig ausgeglichen werden.

Erfindungsgemäß kann weiterhin vorgesehen sein, daß der Implantatpfosten ausschließlich über ein einstückig ausgebildetes viskoelastisches Zwischenelement mit dem Grundkörper und der Distanzhülse in Verbindung steht, wodurch die natürliche Zahnbeweglichkeit zwischen dem knöchern in den Kieferknochen eingeheilten Grundkörper und dem Zahnersatz bzw. im betrachteten Fall dem Implantatpfosten simuliert wird.

Im einzelnen wird bei einem erfindungsgemäßen Implantat mit einem Grundkörper, einer Distanzhülse, ggf. einem elastisch verformbaren Zwischenelement und einem Implantatpfostenbefestigungskopf in der Weise vorgegangen, daß man zunächst den metallischen Grundkörper in einer paßgenauen Bohrung im Kieferknochen knöchern einheilen läßt, wobei angrenzend an die Bohrung ggf. ein oder mehrere schlitzförmige Erweiterungen vorgesehen sein können, um seitliche Flügel des im Prinzip zylindrischen Grundkörpers aufzunehmen. In den eingeheilten Grundkörper des Implantats wird dann die Distanzhülse mit einem Zentrierbund eingesetzt und legt sich mit einer Schulter an den oberen Rand des Grundkörpers an. Danach wird ggf. das elastisch verformbare Zwischenelement mit einer Schulter, die sich an den oberen Rand der Distanzhülse anlegt, in ein Innengewinde des Grundkörpers eingeschraubt. Anschließend wird entweder in das Zwischenelement oder direkt in den Grundkörper der Implantatpfosten eingeschraubt, welcher sich mit einer Schulter an die Oberseite des Zwischenelements bzw. der Distanzhülse anlegt und oberhalb der Schulter einen vorzugsweise mit einer konischen Paßfläche versehenen Befestigungskopf aufweist. In dem Befestigungskopf ist eine Gewindebohrung vorgesehen, mit der beispielsweise eine Krone verschraubt werden kann, wobei die Befestigungsschraube das Material der Krone ausgehend von der Kaufläche durchgreift und in das Innengewinde des Befestigungskopfes eingeschraubt wird. Der Befestigungskopf des Implantatpfostens dient also der Befestigung des Zahnersatzes, bei dem es sich um einen Einzelzahn (eine Krone), eine Brücke oder ein Teil- oder Vollprothese handeln kann, wobei eine größere Teilprothese oder eine Vollprothese dann an anderer Stelle mittels eines oder mehrerer weiterer Implantate zusätzlich befestigt wird. Dabei besteht ein besonderer Vorteil der Distanzhülse darin, daß diese den Grundkörper, der zunächst in der sich wieder schließenden Schleimhaut in den Kieferknochen einheilt, starr bis über die Oberkante der Schleimhaut verlängert, so daß diese nicht durch die Verformungsbewegung gereizt werden kann, welche das elastisch verformbare Zwischenelement bzw. der viskoelastische Implantatpfosten selbst ermöglicht.

Bei dem erfindungsgemäßen Implantat wird der Implantatpfosten bei der Herstellung des für die Anfertigung des Zahnersatzes wichtigen Abdrucks von Kiefer und/oder Zähnen des Patienten durch einen Abdruckpfosten ersetzt, welcher ggf. gleichzeitig das elastische Zwischenelement und auch die Distanzhülse ersetzen kann.

Es hat sich gezeigt, daß bei der Anfertigung eines Modells aufgrund eines solchen Abdrucks im Dentallabor häufig deutlich wird, daß die durch die Lage der Achse des bereits starr und knöchern eingeheilten Grundkörpers vorgegebene Lage der Achse des Befestigungskopfes nicht optimal ist, nämlich so, daß die Befestigungsschraube zum Befestigen des Zahnersatzes an dem Befestigungskopf möglichst genau in der Mitte der Kaufläche eines Zahns liegt.

Da andererseits der Zahnersatz gegenüber den noch vorhandenen Zähnen des Patienten bzw. gegenüber dem Zahnersatz, der bereits an anderen Implantaten befestigt ist, genau ausgerichtet werden muß, verblieb somit oft keine andere Möglichkeit als die Befestigungsschraube an einer anderen, ungünstigeren Stelle des Zahnersatzes anzubringen. Auch Versuche, diesem Problem durch einen deformierbaren Hals zwischen dem Grundkörper des Implantats und dem Befestigungskopf abzuhelfen, haben sich nicht als erfolgreich erwiesen, da der verformbare Hals auch später bei Belastung des Zahnersatzes zu zusätzlichen, unerwünschten Deformationen neigte.

Ausgehend von der vorstehend aufgezeigten Problematik gelingt es mit einer weiteren Ausgestaltung der Erfindung, beim Arbeiten am Modell, d.h. beim genauen Positionieren des Zahnersatzes unter Berücksichtigung der bei dem betreffenden Patienten vorhandenen Zahn- und Kieferverhältnisse, die im Modell nachgebildet sind, eine einfache Möglichkeit dafür zu schaffen, daß die Achse des Befestigungskopfes bezüglich des daran zu befestigenden Zahnersatzes eine optimale Position einnimmt.

Diese Ausführungsform zeichnet sich in vorteilhafter Weise dadurch aus, daß die Befestigungseinrichtungen ein Kugelgelenk mit einem Kugelteil und einem relativ zum Kugelteil schwenkbaren Kugelpfannenteil aufweisen.

Es ist ein wesentlicher Vorteil dieses Implantats gemäß der Erfindung, daß mit Hilfe der Kugelgelenkanordnung eine Feinjustierung des Befestigungskopfes relativ zu dem Grundkörper des Implantats erfolgen kann, so daß am Modell gewisse Divergenzen zwischen der Lage der Grundkörperachse und der erforderlichen Lage des Befestigungskopfes ausgeglichen werden können, was bisher nicht möglich war, da einerseits die gegenseitige Anordnung und Ausrichtung von Grundkörper und Befestigungskopf fest vorgegeben war, während andererseits auch die gegenseitige Positionierung von Zahnersatz und Befestigungskopf keine freie Feinjustierung zuließ. (Im Prinzip könnte beispielsweise der Kugelteil des Befestigungskopfes auch einstückig mit dem Grundkörper des Implantats verbunden sein; eine solche Ausgestaltung dürfte jedoch in der Praxis kaum Anwendung finden, da es sich als vorteilhaft erwiesen hat, den Befestigungskopf erst nachträglich an dem bereits knöchern und starr eingeheilten Grundkörper des Implantats zu befestigen.)

In vorteilhafter Ausgestaltung der Erfindung wird bei einem Implantat mit Befestigungseinrichtungen in Form eines ggf. über ein elastisch verformbares Zwischenelement lösbar in den Grundkörper einschraubbaren und einen Befestigungskopf aufweisenden Implantatpfostens an dem vom Grundkörper abgewandten Ende des Implantatpfostens eine Kugelgelenkanordnung vorgesehen, wobei es besonders günstig ist, wenn das vom Grundkörper abgewandte Ende des Implantatpfostens mit dem Kugelteil versehen ist und wenn der Kugelpfannenteil schwenkbar mit dem Kugelteil verbunden ist und lösbar mit dem Zahnersatz verbindbar ist. Bei dieser Ausgestaltung ergibt sich nämlich am Modell die Möglichkeit, die Achse des Befestigungspfostens so auszurichten, daß ihre Lage optimal für die Befestigung des Zahnersatzes an dem Grundkörper einerseits und an natürlichen Zähnen oder anderen Implantaten andererseits oder auch für das genaue Eingliedern eines Einzelzahns geeignet ist. Wenn dann die richtige Position für die Achse des Befestigungskopfes gefunden ist, wird der Kugelpfannenteil starr an dem Kugelteil fixiert; das Kugelgelenk wird also im Anschluß an das Ausrichten der Achse des Befestigungskopfes blockiert.

Grundsätzlich bestehen mehrere Möglichkeiten, eine bewegliche Verbindung zwischen dem Kugelteil und dem Kugelpfannenteil zu schaffen, beispielsweise mittels einer Schraubverbindung, die aufgrund eines gewissen Spiels innerhalb vorgegebener Grenzen eine Positionierung einer Kugelpfanne gegenüber dem Kugelteil gestattet, wobei die beiden Teile anschließend durch Festziehen der Schraubverbindung in der gewünschten Position miteinander verbunden werden können. Besonders günstig ist es aber, wenn der Kugelpfannenteil den Kugelteil formschlüssig umgreift, insbesondere derart, daß der Kugelpfannenteil aus Metall besteht und an seinem unteren, dem Grundkörper zugewandten Ende, insbesondere durch Verformen mit einem Rollwerkzeug, derart radial nach innen umgebogen ist, daß er eine Äquatorialebene des Kugelteils hintergreift, da auf diese Weise eine einstückige Konstruktion des Kugelpfannenteils ermöglicht wird und für das Kugelgelenk insgesamt nur zwei Elemente, nämlich der Kugelteil und der Kugelpfannenteil benötigt werden. Außer durch Verformen des Kugelpfannenteils könnte die formschlüssige Verbindung allerdings auch auf andere Weise hergestellt werden, beispielsweise dadurch, daß der Kugelpfannenteil von der einen Seite her auf den Kugelteil aufgesetzt und in dieser Lage mit einem Gegenstück verbunden, beispielweise verschraubt wird, welches von der anderen Seite her an die Unterseite des Kugelteils angelegt wird.

Gemäß einer bevorzugten Ausführungsform der Erfindung ist der Kugelpfannenteil ferner mit einer Gewindebohrung versehen und mittels einer in diese Gewindebohrung eingreifenden Feststellschraube bezüglich des Kugelteils in einer vorgegebenen Winkelstellung lösbar festlegbar. Diese Lösung hat den Vorteil, daß die Gewindebohrung im Kugelpfannenteil leicht hergestellt werden kann und nach dem Anziehen der Feststellschraube außerdem noch dazu dienen kann, das innere Ende einer Schraube zur Befestigung des Zahnersatzes aufzunehmen, so daß für das Feststellen des Kugelgelenks zusätzlich lediglich eine einfache, relativ kurze Feststellschraube erforderlich ist. Die Befestigungsschraube kann gegebenenfalls auch selbst gleichzeitig als Feststellschraube dienen.

Eine besonders günstige Ausgestaltung des erfindungsgemäßen Implantats ergibt sich ferner dann, wenn der Implantatpfosten selbst ein innerhalb gewisser Grenzen elastisch verformbares Element aus Kunststoff ist, an dem der Kugelteil einstückig angeformt ist, so daß dieser Teil des Kugelgelenks selbst eine gewisse elastische Verformbarkeit aufweist, die dazu benutzt werden kann, die relative Beweglichkeit von Kugelteil und Kugelpfannenteil vor der Verriegelung des Kugelelements, beispielsweise mit Hilfe einer Feststellschraube, so weit einzuschränken, daß nach einer Positionierung des Kugelpfannenteils gegenüber dem Kugelteil nicht ohne weiteres eine unerwünschte gegenseitige Lageänderung der Teile des Kugelgelenks eintreten kann. Zusätzlich oder stattdessen besteht ferner die Möglichkeit, den Kugelpfannenteil derart auszubilden, daß er den Kugelteil mit einer gewissen Vorspannung umgreift, wobei am inneren bzw. unteren Ende des Kugelpfannenteils, gegebenenfalls ähnlich wie bei einer Spannhülse, federnd nach innen gegen die Kugeloberfläche vorgespannte Finger vorgesehen sein können. Bei einer derartigen Ausgestaltung bestünde dann auch die Möglichkeit, die Elemente des Kugelgelenks lösbar miteinander zu verrasten, wobei die Finger gegen ein unerwünschtes Aufspreizen infolge von Zugkräften nach dem Verrasten, beispielsweise durch einen Federring, in ihrer Lage am Umfang des Kugelteils gesichert werden könnten.

Weitere Einzelheiten und Vorteile der Erfindung werden nachstehend anhand von Zeichnungen noch näher erläutert.

Es zeigen:

Fig. 1-3 Längsschnitte durch bevorzugte Ausführungsformen der den Implantatpfosten umfassenden Be-

4

festigungseinrichtungen für ein Implantat gemäß der Erfindung;

Fig. 4 einen Längsschnitt durch ein erfindungsgemäßes Implantat mit in den Kieferknochen eingesetztem Grundkörper und mit Befestigungseinrichtungen gemäß Fig. 3; und

Fig. 5-7 abgewandelte Ausführungsformen der den Implantatpfosten umfassenden Befestigungseinrichtungen für ein Implantat gemäß der Erfindung.

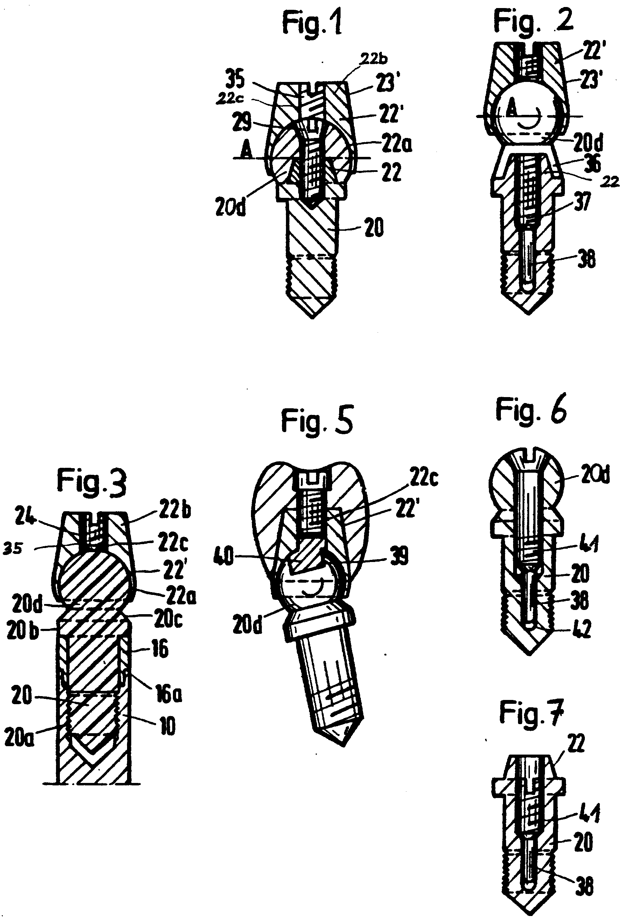

Bei dem Ausführungsbeispiel gemäß Fig. 1 der Zeichnung ist auf den Befestigungskopf 22 des Implantatpfostens 20 mittels einer Schraube 29 ein Kugelteil 20d aufgeschraubt, welches eine konische Aussparung zur Aufnahme des konischen Befestigungskopfes 22 aufweist. In diesem Fall dient also der Befestigungskopf 22 nicht direkt der Befestigung des Zahnersatzes, sondern indirekt zunächst der Halterung des Kugelteils 20d, welcher mit einem Kugelpfannenteil 22a zusammenwirkt, der Bestandteil eines äußeren Befestigungskopfes 22′ ist, der wieder eine konische Paßfläche 23′ aufweist, welche eine sichere Halterung des Zahnersatzes gestattet, wobei an dieser Stelle darauf hingewiesen werden soll, daß das Vorhandensein eine Paßfläche 23 bzw. 23′ an dem Befestigungskopf 22 bzw. 22′, und zwar insbesondere einer konischen Paßfläche, auch dann eine vorteilhafte und zuverlässige Befestigung des Zahnersatzes gestattet, wenn dieser nicht, wie eingangs beschrieben, angeschraubt wird, sondern lediglich aufgesteckt oder aufgekittet. Der Kugelteil 20d bildet das eine Element eines Kugelgelenks, mit dem der Kugelpfannenteil 22a des äußeren Befestigungskopfes 22′ zusammenwirkt, welcher also das zweite Element des Kugelgelenks bildet.

Der Befestigungskopf 22′ besteht vorzugsweise aus Titan und besitzt eine Kugelpfanne 22a, welche den Kugelteil 20d derart umgreift, daß eine Äquatorialebene A desselben von dem inneren bzw. unteren Rand des äußeren Befestigungskopfes 22′ hintergriffen wird. Dies wird bei Ausbildung des Befestigungskopfes 22′ aus Metall einfach in der Weise erreicht, daß der untere Rand nach innen gerollt wird, wie dies aus Fig. 1 der Zeichnung deutlich wird. Oberhalb der Kugelpfanne 22a besitzt der Befestigungskopf einen konischen Kopfteil 22b mit eine zentralen Gewindebohrung 22c, in welche eine Feststellschraube 35 eingeschraubt ist, die gegen den Kugelteil 20d angezogen werden kann, um des Kugelgelenk zu blockieren, so daß die richtige gegenseitige Ausrichtung der Elemente 20d, 22a des Kugelgelenks erreicht wird. Auf den Befestigungskopf 22′ kann nunmehr ein Zahn bzw. eine Krone aufgesetzt werden, welche reibschlüssig an dem Befestigungskopf gehalten oder auf diesen aufzementiert sein kann. Wenn die Schraube 35 als Madenschraube ausgeführt wird, kann der obere Teil des Gewindes im Befestigungskopf 22 auch zum Eindrehen einer Halteschraube für die Krone verwendet werden. Wenn man die Länge der Befestigungsschraube sorgfältig abstimmt, kann ferner dieselbe Schraube sowohl zum Befestigen der Krone als auch zum Feststellen des Kugelgelenks dienen. Auf jeden Fall ist es vorteilhaft, wenn man dafür sorgt, daß das innere Ende der Schraube eine konkave Kugelkalotte bildet und wenn der Kopf der Schraube 29 als konvexe Kugelkalotte ausgebildet wird, da hierdurch ein Blockieren des Kugelgelenks ohne das Auftreten von Querkräften ermöglicht wird, die die Tendenz haben könnten, die eingestellte gegenseitige Lage der Gelenkteile beim Blockieren des Gelenks zu verändern.

Das Ausführungsbeispiel gemäß Fig. 2 entspricht demjenigen gemäß Fig.1 insofern, als auch hier ein Kugelgelenk vorhanden ist, wobei die Gelenkteile in der anhand von Fig. 1 erläuterten Weise ausgebildet sind und zusammenwirken. Anders als bei dem Ausführungsbeispiel gemäß Fig. 1 ist jedoch die konische Aussparung nicht direkt in dem Kugelteil 20d vorgesehen, sondern in einem mit dem Kugelteil 20d verbundenen Sockelteil 36. Dieser Sockelteil sitzt auf dem inneren Befestigungskopf 22. Außerdem ist der Sockelteil mit einem Schraubteil 37 versehen, dessen oberes Ende in den Kugelteil 20d, vorzugsweise im Preßsitz, eingeseizt ist und an dessen unteres bzw. inneres Ende sich ein Aufspreizdorn 38 anschließt, dessen Durchmesser etwas größer ist als der Durchmesser einer glattwandigen Verlängerung des Innengewindes des Implantatpfostens 20. Der Aufspreizdorn 38 drückt das Außengewinde des Implantatpfostens 20 in engen Kontakt mit dem Innengewinde des Grundkörpers 10, so daß auch zwischen dem Grundkörper 10 und dem Implantatpfosten 20 eine besonders sichere Verbindung erhalten wird, wobei davon ausgegangen wird, daß der Implantatpfosten 20 wieder aus einem elastisch verformbaren Kunststoffmaterial besteht.

Abweichend von dem Ausführungsbeispiel gemäß Fig. 1 ist der Kugelteil 20d bei dem Ausführungsbeispiel gemäß Fig. 3 einstückig an den Implantatpfosten 20 angeformt. Hierdurch entfällt die Notwendigkeit, eigene Befestigungseinrichtungen vorzusehen, um den Kugelteil 20d mit dem Implantatpfosten zu verbinden.

Im übrigen ist der Implantatpfosten 20 gemäß Fig. 3 zur Verwendung in Verbindung mit einer Distanzhülse 16 bestimmt, die eine Verlängerung des oberen Endes des Grundkörpers 10 bildet. Die Distanzhülse 16 besitzt einen Zentrierbund, der in den Grundkörper 10 eingreift und an einer Schulter 16a endet, die auf der Stirnfläche des Grundkörpers 10 aufliegt.

Fig. 4 zeigt eine implantiertes Implantat gemäß der Erfindung mit einer Implantatpfostenkonstruktion gemäß der vorstehend erläuterten Fig. 3. Anhand von Fig. 4 soll nachstehend näher erläutert werden, wie mit einem erfindungsgemäßen Implantat gearbeitet wird. Im einzelnen wird bei der Behandlung eines Patienten zunächst der im wesentlichen zylindrische Grundkörper 10 in eine vorbereitete Bohrung im Kieferknochen 12 paß-genau eingesetzt wird und dort innerhalb eines Zeitraums von etwa drei Monaten knöchern eingeheilt, während das obere, offene Ende des Grundkörpers 10 während des Einheilprozesses zunächst mittels einer Verschlußschraube (nicht dargestellt) verschlossen wird, über der auch die geöffnete Schleimhaut 14 wieder zusammenwächst. Wenn der Grundkörper 10 eingeheilt ist, wird über der Verschlußschraube die Schleimhaut 14 wieder geöffnet, und es wird in die offene Seite des Grundkörpers 10 eine Distanzhülse 16 eingesetzt, welche mit einem Bund in den Grundkörper eingreift und sich mit einer Schulter 16a an den oberen Rand des Grundkörpers 10 anlegt. Anschließend wird in das Innengewinde des Grundkörpers zunächst ein Abdruckpfosten (nicht dargestellt) eingeschraubt. Wenn dies geschehen ist, wird bei eingeschraubtem Abdruckpfosten ein Abdruck bzw. Abguß der Zahn/Kiefer-Formation des Patienten genommen, und anhand dieses Abdrucks wird ein Modell erstellt. Aufgrund des Modells wird dann der jeweils erforderliche Zahnersatz angefertigt, im einfachsten Fall eine Krone, wobei jedoch im Modell der Implantatpfosten verwendet wird, welcher gemäß Fig. 3 an seinem oberen Ende ein Kugelgelenk aufweist, mit dessen Hilfe der Befestigungskopf 22 achsgerecht ausgerichtet werden kann. Dabei erfolgt bereits im Modell die Verriegelung des Kugelgelenks, nachdem die verschiedenen Teile des Zahnersatzes in die richtige gegenseitige Lage gebracht wurden.Wie Fig. 4 zeigt, schließen dabei die Achse C des Grundkörpers bzw. des Implantatpfostens und die Achse B des Befestigungskopfes miteinander einen stumpfen Winkel $\alpha$ ein.

Bei dem erfindungsgemäßen Implantat gemäß Fig. 5 ist der Grundkörper 10 wieder durch eine Distanzhülse 16 verlängert, und der Implantatpfosten 20 ist wieder als einstückiges Kunstoffteil mit angeformtem Kugelteil 20d ausgebildet. Der Kugelteil besitzt in seinem oberen Teil eine Aussparung 39, welche mit der Gewindebohrung 22c des Befestigungskopfes 22 in Verbindung steht. Wenn die richtige Stellung des Kugelgelenks gefunden ist, wird durch die Gewindebohrung 22c hindurch eine aushärtbare Kunststoffmasse, beispielsweise in Form kleiner Kugeln 40, in die Aussparung 39 und den angrenzenden Teil der Gewindebohrung 22c gestopft. Wenn der Kunststoff ausgehärtet ist, wird das Kugelgelenk folglich durch den ausgehärteten Kunststoff in der gewünschten Lage blockiert.

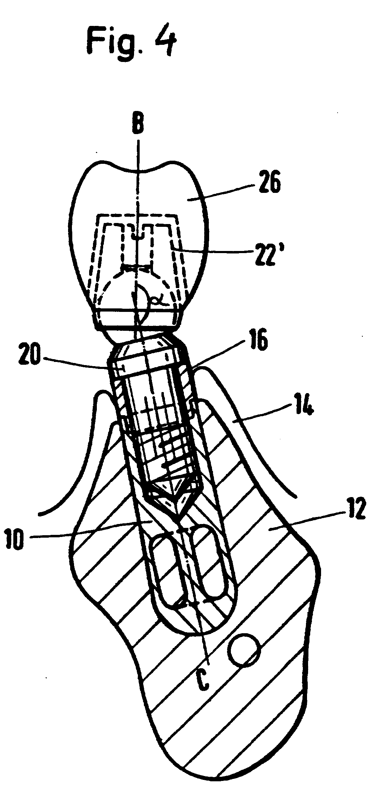

In Fig. 6 und 7 sind schließlich zwei weitere abgewandelte Implantatpfostenanordnungen gezeigt, die etwa derjenigen gemäß Fig. 4 entsprechen, wobei jedoch in beiden Fallen eine Schraube 41 vorgesehen ist, welche ähnlich wie der Schraubteil 37 in Fig. 2 mit einem Aufspreizdorn 38 versehen ist, der in eine engere Sackbohrung, gegebenenfalls auch in eine bis zum inneren Ende des Implantatpfostens durchgehende Bohrung 42 eingreift.

Bei den Ausführungsbeispielen gemäß Fig. 6 und 7 dienen die Schrauben 41 mit ihrem Aufspreizdorn 38 allein dem Zweck, das Kunststoffmaterial des Implantatpfostens 20 im Bereich des Aufspreizdornes 38 derart nach außen zu drücken, daß sich eine zuverlässige Drehsicherung zwischen dem Grundkörper 10 und dem Implantatpfosten 20 ergibt.

Zusammenfassend läßt sich feststellen, daß mit den Implantaten gemäß der Erfindung bei der Anfertigung von festsitzendem Zahnersatz im Labor bei verkürzter Arbeitszeit eine erhöhte Genauigkeit und Qualität erreichbar ist, was letztlich auch dem Patienten besonders zugute kommt und insgesamt einen beträchtlichen Fortschrift bei der zahnärztlichen Behandlung bedeutet.

## Patentansprüche

1. Enossales Implantat mit einen Befestigungskopf (22, 22′) aufweisenden und einen in eine Blindbohrung eines metallischen Grundkörpers (10) lösbar einschraubbaren Implantatpfosten (20) umfassenden Befestigungseinrichtungen für einen Zahnersatz (26), wobei der mit dem von dem Grundkörper (10) abgewandten Ende des Implantatpfostens (20) verbundene Befestigungskopf (22, 22′) mit einer sich in Richtung auf den Zahnersatz (26) verjüngenden Paßfläche (23, 23′) versehen ist und zwischen dem Befestigungskopf (22, 22′) und dem Grundkörper (10) eine viskoelastische Dämpfungseinrichtung vorgesehen ist, dadurch gekennzeichnet, daß im das offene Ende des Grundkörpers (10) eine den Grundkörper verlängernde, starre Distanzhülse (16) mit einem an ihr vorgesehenen Zentrierbund einsetzbar ist, und daß die Distanzhülse vom Implantatpfosten (20) über eine ebenfalls an der Distanzhülse vergesehene Schulter (16a) an den oberen Rand des Grundkörpers anlegbar ist.

2. Implantat nach Anspruch 1, dadurch gekennzeichnet, daß der Implantatpfosten (20) selbst, insbesondere einschließlich des Befestigungskopfes (22), als einstückiges Kunststoffteil aus viskoelastischem Material hergestellt ist.

3. Implantat nach Anspruch 1 oder 2, dadurch gekennzeichnet, daß der Implantatpfosten (20) ausschließlich über ein einstückig ausgebildetes viskoelastisches Zwischenelement mit dem Grundkörper (10) und der Distanzhülse (16) in Verbindung steht.

**4.** Implantat nach einem der vorangehenden Ansprüche, dadurch gekennzeichnet, daß die Befestigungseinrichtungen (20, 22) ein Kugelgelenk (20d, 22a) mit einem Kugelteil (20d) und einem relativ zum Kugelteil (20d) schwenkbaren Kugelpfannenteil (22a) aufweist.

**5.** Implantat nach Anspruch 4, dadurch gekennzeichnet, daß von den Elementen des Kugelgelenks (20d, 22a) das eine Element (20d) an dem Implantatpfosten (20) und das andere Element (22a) an dem Befestigungskopf (22) vorgesehen ist.

**6.** Implantat nach Anspruch 5, dadurch gekennzeichnet, daß der Kugelteil (20d) des Kugelgelenks (20d, 22a) an dem Implantpfosten (20) vorgesehen ist und daß der Kugelpfannenteil (22a) an dem Befestigungskopf (22) vorgesehen ist.

**7.** Implantat nach einem der Ansprüche 4 bis 6, dadurch gekennzeichnet, daß der Kugelpfannenteil (22a) den Kugelteil (20d) formschlüssig umgreift.

**8.** Implantat nach Anspruch 7, dadurch gekennzeichnet, daß der Kugelpfannenteil (22a) aus Metall besteht und an seinem unteren, dem Grundkörper (10) zugewandten Ende, insbesondere durch Rollen, derart radial nach innen gebogen ist, daß er eine Äquatorialebene des Kugelteils (20d) hintergreift.

**9.** Implantat nach einem der Ansprüche 4 bis 8, dadurch gekennzeichnet, daß an dem Kugelpfannenteil (22a) eine Gewindebohrung (22c) vorgesehen ist und daß der Kugelpfannenteil (22a) mittels einer in diese Gewindebohrung (22c) eingeschraubten Feststellschraube (35) bezüglich des Kugelteils (20d) bei einer wählbaren Winkelstellung der Längsachse (B) des Befestigungkopfes (22) relativ zur Längsachse (C) des Grundkörpers (10) feststellbar ist.

**10.** Implantat nach einem der Ansprüche 5 bis 9, dadurch gekennzeichnet, daß der Kugelteil (20d) einstückig an den Implantatpfosten (20) angeformt ist.

**11.** Implantat nach einem der Ansprüche 2 bis 10, dadurch gekennzeichnet, daß der als Kunststoffteil ausgebildete Implantatpfosten (20) mit einer Bohrung (42) zur Aufnahme eines Aufspreizdorns (38) mit größerem Durchmesser als demjenigen der Bohrung (42) aufweist, wobei der Aufspreizdorn (38) am freien Ende einer Befestigungsschraube (37, 40) vorgesehen ist.

## Claims

**1.** An endosseous implant comprising a fixing head (22, 22') and fixing means for a tooth replacement (26) which comprise an implant post (20) and can be releasably screwed into a blind bore in a metal foundation member (10), the fixing head (22, 22') connected to the end of the implant post 20) remote from the foundation member (10) having a seating surface (23, 23') which tapers in the direction towards the tooth replacement (26), and a visco-elastic damping means being provided between the fixing head (22, 22') and the foundation member (10), characterised in that a rigid spacer sleeve (16) prolonging the foundation member and having a centring collar can be inserted into the open end of the foundation member (10), and the spacer sleeve has a shoulder (16a) which can be applied by the implant post (20) against the upper edge of the foundation member

**2.** An implant according to claim 1, characterised in that the actual implant post (20), more particularly including the fixing head (22), is manufactured in the form of a one-piece plastics part of visco-elastic material.

**3.** An implant according to claim 1 or 2, characterised in that the implant post (20) is connected to the foundation member (10) and the spacer sleeve (16) exclusively via an integrally visco-elastic intermediate component.

**4.** An implant according to any of the preceding claims, characterised in that the fixing means (20, 22) comprise a ball and socket joint (20d, 22a) having a ball part (20d) and a socket part (22a) pivotable relative to the ball part (20d).

**5.** An implant according to claim 4, characterised in that one component (20d) of the ball and socket joint (20d, 22a) is provided on the implant post (20) and the other component (22a) on the fixing head (22).

6. An implant according to claim 5, characterised in that the ball part (20d) of the ball and socket joint (20d, 22a) is provided on the implant post (20) and the socket part (22a) is provided on the fixing head (22).

7. An implant according to any of claims 4 to 6, characterised in that the socket part (22a) positively surrounds the ball part (20d).

8. An implant according to claim 7, characterised in that the socket part (22a) is of metal and its lower end facing the foundation member (10) is bent radially inwards, more particularly by rolling, so that it extends behind an equatorial plane of the ball part (20d).

9. An implant according to any of claims 4 to 8, characterised in that a threaded bore (22c) is formed on the socket part (22a) and the socket part (22a) can be secured relatively to the ball part (20d), by a setscrew (35) screwed into the threaded bore (22c), at an adjustable angular position of the longitudinal axis (B) of the fixing head (22) relative to the longitudinal axis (C) of the foundation member (10).

10. An implant according to any of claims 5 to 9, characterised in that the ball part (20d) is integrally moulded on the implant post (20).

11. An implant according to any of claims 2 to 10, characterised in that the implant post (20), which is a plastic part, has a bore (42) for receiving an expanding mandrel (38) having a larger diameter than the bore (42), the expanding mandrel (38) being disposed at the free end of a fixing screw (37, 40).

## Revendications

1. Implant intra-osseux avec des dispositifs de fixation pour un ensemble de substitution de dents (26), comportant une tête de fixation (22,22') ainsi qu'un pivot d'implant (20) pouvant se visser de manière démontable dans un trou borgne d'un corps de base métallique (10), la tête de fixation (22,22') reliée a l'extrémité du pivot d'implant (20), opposée au corps de base (10), étant munie d'une surface d'assise ajustée (23,23') se rétrécissant en direction de l'ensemble de substitution de dents (26), un dispositif d'amortissement visco-élastique étant par ailleurs prévu entre la tête de fixation (22,22') et le corps de base (10), implant caractérisé en ce qu'une douille-entretoise (16) prologeant le corps de base (10) et rigide peut être appliquée dans l'extrémité ouverte de ce corps de base par l'intermédiaire d'une embase de centrage prévue sur la douille, et en ce que cette douille de centrage peut être appliquée sur le bord supérieur du corps de base, par l'intermédiaire d'un épaulement (16a) également prévu sur la douille-entretoise.

2. Implant selon la revendication 1, caractérisé en ce que le pivot d'implant (20) lui-même, et notamment y compris la tête de fixation (22), est réalisé en un matériau visco-élastique, sous la forme d'une pièce unique en matière plastique.

3. Implant selon la revendication 1 ou 2, caractérisé en ce que le pivot d'implant (20) est en contact avec le corps de base (10) et la douille-entretoise (16), uniquement au moyen d'un élément intermédiaire réalisé d'une seule pièce en un matériau visco-élastique.

4. Implant selon l'une des revendications précédentes, caractérisé en ce que les dispositifs de fixation (20, 22) comprennent une articulation à rotule (20d, 22a) avec une partie formant rotule (20d) et une partie formant cuvette sphérique (22a) pouvant pivoter par rapport à la rotule (20d).

5. Implant selon la revendication 4, caractérisé en ce que l'un (20d) des éléments de l'articulation à rotule (20d, 22a) est prévu sur le pivot d'implant (20), tandis que l'autre élément (22a) est prévu sur la tête de fixation (22).

6. Implant selon la revendication 5, caractérisé en ce que la partie formant rotule (20d) de l'articulation à rotule (20d, 22a), est prévue sur le pivot d'implant (20), et en ce que la partie formant cuvette sphérique (22a) est prévue sur la tête de fixation (22).

7. Implant selon l'une des revendications 4 à 6, caractérisé en ce que la partie formant cuvette sphérique (22a) entoure la partie formant rotule (20d), par complémentarité de formes.

8. Implant selon la revendication 7, caractérisé en ce que la partie formant cuvette sphérique (22a) est constituée de métal, et est recourbée radialement vers l'intérieur, notamment par galetage, au niveau de son extrémité inférieure faisant face au corps de base (10), de manière à enserrer la rotule (20d), au-delà d'un plan équatorial de celle-ci.

9. Implant selon l'une des revendications 4 à 8, caractérisé en ce qu'il est prévu un trou taraudé (22c) dans la partie formant cuvette sphérique (22a), et en ce que la cuvette sphérique (22a) peut être bloquée par rapport à la rotule (20d), au moyen d'une vis de blocage (35) engagée dans le trou taraudé (22c), et cela dans une position angulaire relative entre l'axe longitudinal (B) de la tête de fixation (22) et l'axe longitudinal (C) du corps de base (10), pouvant être librement sélectionnée.

10. Implant selon l'une des revendications 5 à 9, caractérisé en ce que la partie constituant la rotule (20d) est formée d'une seule pièce sur le pivot d'implant (20).

11. Implant selon l'une des revendications 2 à 10, caractérisé en ce que le pivot d'implant (20) se présentant sous la forme d'une pièce en matière plastique, comporte un alésage (42) destiné à recevoir une broche d'expansion (38) de diamètre plus important que celui de l'alésage (42), cette broche d'expansion (38) étant prévue à l'extrémité libre d'une vis de fixation (37, 40).

Fig.1

Fig. 2

Fig. 3

Fig. 5

Fig. 6

Fig. 7

# Fig. 4